Europäisches Patentamt

European Patent Office

Office européen des brevets

(11) Numéro de publication : **0 014 609**
**B1**

(12) **FASCICULE DE BREVET EUROPÉEN**

(45) Date de publication du fascicule du brevet :
30.03.83

(21) Numéro de dépôt : **80400061.0**

(22) Date de dépôt : **15.01.80**

(51) Int. Cl.³ : **G 02 F 1/13, H 04 N 5/74**

(54) **Dispositif de visualisation sur grand écran.**

(30) Priorité : **13.02.79 FR 7903637**

(43) Date de publication de la demande :
**20.08.80 Bulletin 80/17**

(45) Mention de la délivrance du brevet :
**30.03.83 Bulletin 83/13**

(84) Etats contractants désignés :
**DE GB IT NL SE**

(56) Documents cités :
**FR A 2 260 119**
**FR A 2 389 955**
**US A 3 909 823**
**ELECTRONICS. USA. 3-8-78 pp. 43, 44. « Flat LCD panel has big potential if... »**

(73) Titulaire : **THOMSON-CSF**
**173, Boulevard Haussmann**
**F-75379 Paris Cedex 08 (FR)**

(72) Inventeur : **Hareng, Michel**
**"THOMSON-CSF" - SCPI 173, bld Haussmann**
**F-75360 Paris Cedex 08 (FR)**
Inventeur : **Le Berre, Serge**
**"THOMSON-CSF" - SCPI 173, bld Haussmann**
**F-75360 Paris Cedex 08 (FR)**

(74) Mandataire : **Desperrier, Jean-Louis et al**
**THOMSON-CSF SCPI 173, Bld Haussmann**
**F-75379 Paris Cedex 08 (FR)**

Jouve, 18, rue St-Denis, 75001 Paris, France

EP 0 014 609 B1

Dispositif de visualisation sur grand écran

La présente invention se rapporte aux dispositifs de visualisation sur grand écran dans lesquels on projette sur un écran l'image qui a été affichée sur une cellule de visualisation. Un tel dispositif permet par exemple d'afficher une image de télévision sans utiliser de tube à rayons cathodiques.

Il est connu d'utiliser pour cela une cellule à cristal liquide décrite dans le fascicule de brevet FR-A-2.389.955 déposé le 5 Mai 1977 par la demanderesse sous le titre « Dispositif de visualisation d'images et système de télévision utilisant un tel dispositif ». Dans ce dispositif, on enregistre l'image de télévision ligne par ligne dans une couche de cristal liquide smectique en utilisant des lignes chauffantes qui permettent de porter le cristal liquide dans une phase isotrope. Au retour du cristal liquide dans la phase smectique, celui-ci est plus ou moins diffusant selon la tension électrique représentative du signal vidéo qui est appliqué le long de la ligne chauffante. Les dimensions d'une telle cellule sont nécessairement limitées, de l'ordre de 1 cm de côté, et il est nécessaire pour obtenir une image de la taille de celle donnée par exemple par un tube à rayons cathodiques, d'effectuer une projection optique de cette image sur un écran. Le système de projection optique proposé dans le brevet mentionné ci-dessus utilise une optique de Schlieren. La couche de cristal liquide est associée à un réflecteur de lumière et est éclairée de façon à fournir par réflexion directe un faisceau bloqué par un cache. Par contre, le rayonnement rétrodiffusé peut contourner le cache et être recueilli par un objectif de projection qui conjugue optiquement la couche de cristal liquide et la surface de l'écran. Seul le rayonnement rétrodiffusé contribue à l'éclairement de l'écran. La solution complémentaire est également prévue, à savoir que l'éclairement de l'écran résulte de la réflexion directe, ce qui revient à inverser le contraste. Quels que soient les systèmes optiques utilisés, l'encombrement en profondeur du dispositif de projection est loin d'être négligeable. Au total, les dimensions hors tout du dispositif comprenant la cellule, le système de projection et l'écran sont de l'ordre de celles d'un tube à rayons cathodiques.

On a développé ces dernières années, sous le nom générique d'optique distribuée, un dispositif de projection sur écran ayant une faible profondeur. Pour cela, l'image originaire est éclatée en une multitude de petits morceaux qui sont chacun projetés par une lentille unique sur un écran. L'ensemble du système est étudié pour que sur cet écran les lignes de séparation des différents morceaux de l'image soient sensiblement invisibles. Dans sa version originale, ce système était purement optique et on en trouvera une description dans la revue US : « Journal of Applied Photographic Engineering », Volume 3, n° 4, 1977, pages 221-224.

Un article intitulé « Flat LCD panel has big potential if... » paru à la page 43 du numéro du 3 Août 1978 de la revue US « Electronics », suggère de remplacer les petits morceaux d'images de ce dispositif par des cellules à cristal liquide. On obtient ainsi un dispositif de visualisation sur grand écran utilisant un ensemble de lentilles en liaison avec ces cellules à cristal liquide, ce qui permet d'obtenir une faible profondeur. Toutefois, cette description très sommaire vise une utilisation de cellules en transmission et le système d'illumination est constitué par une structure à fibres optiques dont la réalisation est relativement compliquée et coûteuse.

L'objet de l'invention est un dispositif de projection sur grand écran utilisant une technique optique distribuée dans laquelle les morceaux agrandis d'image sont formés par fragments d'information visuelle dans des cellules conformes à celles décrites dans la demande de brevet référencée ci-dessus. L'illumination de ces cellules est obtenue par une plaque transparente formant guide de lumière et éclairée par son pourtour. Un ensemble de zones gravées sur l'une des faces de cette plaque permet d'extraire la lumière qui circule à l'intérieur pour illuminer les cellules à cristal liquide.

D'autres particularités et avantages de l'invention apparaîtront clairement dans la description suivante présentée à titre d'exemple non limitatif et faite en regard des figures annexées dont :

la figure 1 représente une vue partielle en coupe d'un dispositif de visualisation selon l'invention ;

la figure 2 représente une vue partielle en coupe d'une variante du dispositif de la figure 1 ;

la figure 3 représente une vue en coupe d'un moyen d'illumination de la plaque 5 des dispositifs représentés en figures 1 et 2 ;

la figure 4 représente le schéma d'un dispositif de commande d'un dispositif de visualisation selon l'invention.

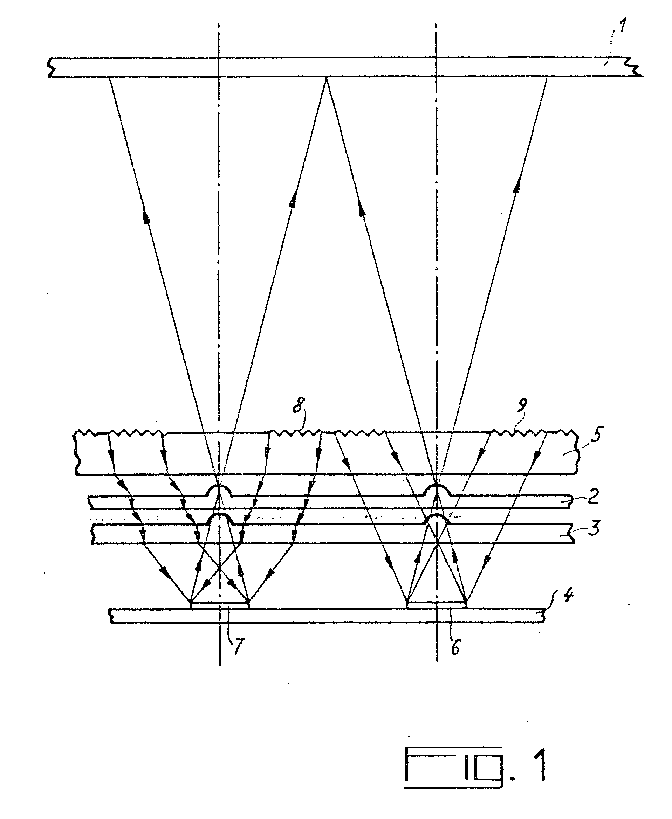

Le dispositif de visualisation représenté sur la figure 1 comprend un verre dépoli 1 formant écran sur lequel l'image est projetée par l'intermédiaire d'un système de plaques 2 et 3 comprenant des lentilles moulées. Cette image est formée sur un ensemble de cellules à cristal liquide dont on n'a représenté sur la figure que les 2 cellules 6 et 7. Ces cellules sont supportées par une plaque support 4 sur laquelle est déposé un réseau de connexions qui permet d'amener sur les cellules les signaux électriques déterminant les images.

Ces cellules fonctionnent par réflexion et sont éclairées à partir d'une plaque guide de lumière 5. La lumière est introduite dans cette plaque 5 d'une manière qui sera décrite plus loin. Elle s'y propage de manière guidée et ne peut s'en échapper par les faces supérieure et inférieure. Pour éclairer les cellules on a ménagé sur la face supérieure de cette plaque un ensemble de réseaux circulaires tels que 8 et 9, centrés sur les axes des systèmes lentilles-cellules. L'inclinaison et le pas de ces réseaux sont tels que lorsque les rayons lumineux viennent les frapper, ils sont renvoyés vers la face inférieure de la plaque 5 sous un angle tel qu'ils ne subissent plus alors la réflexion totale. Ils s'échappent donc de cette face inférieure puis traversent les plaques 2 et 3 en dehors des lentilles pour finalement illuminer les cellules 6 et 7. Le trajet des rayons d'éclairage a·été dessiné de manière détaillée à gauche de la figure et d'une manière plus schématique sur la droite.

Les cellules 6 et 7 fonctionnent par réflexion, c'est-à-dire que lorsqu'il n'y a pas d'image inscrite dessus, les rayons lumineux traversent le cristal liquide qui est transparent et viennent se réfléchir sur le fond de la cellule qui est métallique. L'angle de réflexion étant alors égal à l'angle d'incidence, le rayon lumineux de retour traverse les plaques 3 puis 2 en dehors des portions formant lentille et destinées à former l'image sur l'écran 1. Dans les portions de l'image destinées à être visualisées par contre, le cristal liquide est diffusant et il n'y a plus alors réflexion proprement dite mais diffusion selon un angle solide relativement grand de la lumière vers le haut. Une bonne partie de cette lumière ainsi rétro-diffusée est alors captée par les lentilles portées par les plaques 2 et 3 qui en forment l'image sur l'écran 1. Contrairement au dessin qui est simplifié pour être plus lisible, l'ouverture numérique des lentilles est grande et approximativement de 1, ce qui fait qu'il y a peu de perte de lumière rétro-diffusée.

Dans une réalisation particulière des réseaux 8 et 9 ceux-ci sont constitués d'une série d'anneaux concentriques de section triangulaire et centrés sur les axes des cellules 6 et 7. Les rayons lumineux qui se propagent dans la plaque 5 sont inclinés par rapport aux faces supérieure et inférieure de celle-ci entre une incidence rasante et une incidence correspondant à l'angle de réflexion totale. Lorsqu'ils tombent sur les faces des anneaux constituant les réseaux, l'incidence de réflexion est changée ce qui leur permet de sortir par la face inférieure de la plaque 5. Pour éviter une perte de lumière par le réseau due au fait que l'incidence sur les faces des anneaux est inférieure à l'incidence correspondant à la réfraction totale, on métallise la surface supérieure de la plaque 5 à l'emplacement de ces réseaux. Les rayons ainsi extraits de la plaque 5 par les réseaux 8 et 9 sont situés à l'intérieur d'un cône relativement large. Pour permettre qu'aucun de ces rayons réfléchis par le fond métallique des cellules 6 et 7 ne soit repris par les lentilles des couches 2 et 3, on utilise un effet de collimation en éloignant suffisamment la plaque 5 du support 4 et en donnant à la différence des dimensions entre l'anneau extérieur et l'anneau intérieur de chaque réseau, une valeur sensiblement égale aux dimensions des cellules 6 et 7. Le diamètre minimum de l'anneau intérieur sera choisi pour que le rayon extrême réfléchi par la cellule ne soit pas capté par les lentilles de projection.

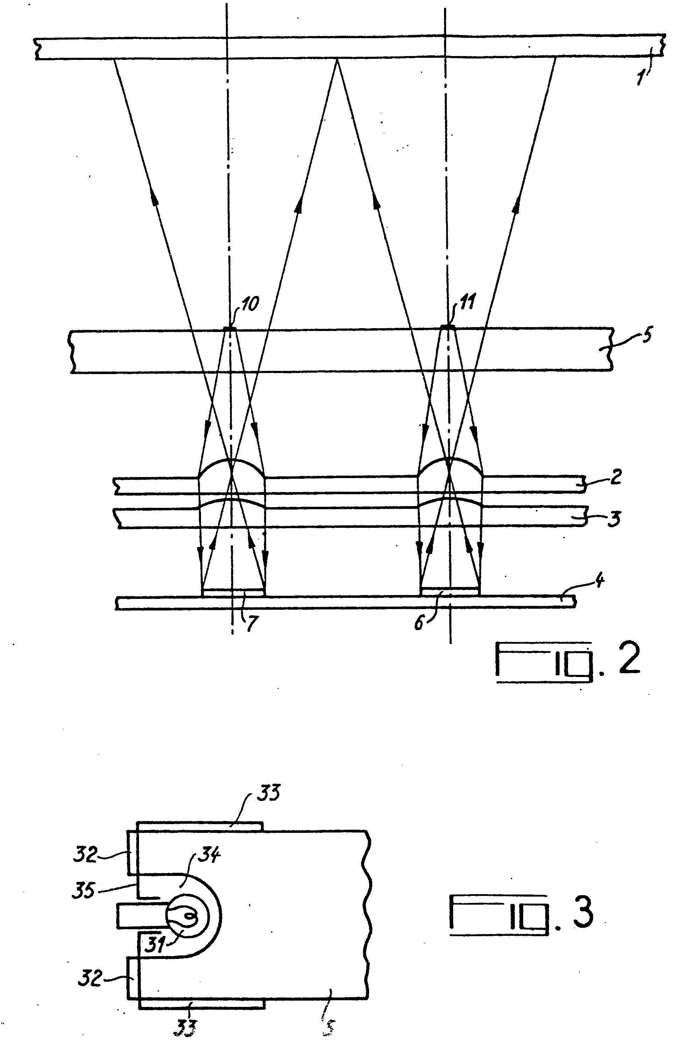

La figure 2 représente une variante de réalisation du dispositif de la figure 1, dans lequel on utilise une plaque qui permet un meilleur rendement de l'illumination des cellules 6 et 7.

Cette plaque 5 comporte, au point de rencontre avec les axes des ensembles cellules-lentilles sur sa face supérieure, de petites zones 10 et 11 que nous appellerons dans la suite points d'illumination. Ces points d'illumination permettent de modifier le trajet des rayons lumineux qui se propagent de manière guidée dans la plaque 5. Lorsque ces rayons touchent les points d'illumination 10 et 11, ils sont réfléchis vers le bas selon un angle solide relativement fermé et centré sur les axes des systèmes lentilles-cellules. Ces rayons lumineux sortent ainsi de la plaque 5 et sont collectés par les lentilles portées par les plaques 2 et 3. En plaçant les points d'illumination 10 et 11 sensiblement au foyer des lentilles on obtient ainsi en sortie des lentilles des faisceaux lumineux sensiblement parallèles qui permettent d'éclairer de manière sensiblement uniforme et normale les cellules 6 et 7.

La lumière réfléchie par le fond métallique des cellules de visualisation forme elle aussi un faisceau sensiblement parallèle et normal au plan de ces cellules. Ce faisceau de retour est collecté par les lentilles et focalisé par elles sensiblement aux points 10 et 11. Une métallisation déposée sur les points 10 et 11, qui permet par ailleurs d'extraire la lumière avec un meilleur rendement, arrête le faisceau en retour et empêche de former des taches lumineuses gênantes sur l'écran 1.

Les parties diffusantes du cristal liquide par contre renvoient la lumière en arrière selon un angle solide relativement grand, et cette lumière collectée par les lentilles est focalisée sur l'écran 1 où se forme l'image de ces parties diffusantes. Comme l'écran 1 est proche de la plaque 4 et que le faisceau formant les images sur l'écran est déjà large au passage de la plaque lumineuse 5, les points métallisés 10 et 11 n'en occultent qu'une faible partie et le rendement lumineux est bon.

Un mode de réalisation des points d'illumination 10 et 11 consiste à dépolir la face supérieure de la plaque 5 sur des petites rondelles centrées sur les axes des ensembles lentilles-cellules. Ces emplacements ainsi dépolis ne sont plus réfléchissants mais diffusants et la lumière qu'ils reçoivent ressort par la face inférieure de la plaque 5. Pour compléter l'effet et éviter une déperdition de lumière par la face supérieure, on métallise ces emplacements. Cette métallisation sert également, comme on l'a dit plus haut, à arrêter le faisceau de retour provenant de la réflexion sur le fond métallique des cellules 6 et 7.

Dans un mode de réalisation particulier représenté en figure 3, on utilise pour exciter l'illumination de la plaque 5 une lampe 32 située dans une cavité 34 creusée dans la paroi latérale de la plaque 5. Les autres faces de la paroi latérale de la plaque 5 sont recouvertes d'une métallisation 32 qui permet à la lumière de ne pas s'échapper de la plaque tout en étant renvoyée dans celle-ci qui se comporte comme une cavité. Les bords des faces supérieure et inférieure sont recouverts d'une peinture opaque et absorbante 33. Le rôle de cette peinture est d'absorber la lumière provenant directement de la lampe et qui sortirait autrement sans subir la réflexion totale sur ces faces. La largeur de cette bande de peinture est telle qu'un rayon provenant du point le plus extrême vers la droite du filament de la lampe ne peut toucher l'une des faces supérieure ou inférieure en dehors de la zone recouverte par la peinture qu'en subissant la réflexion totale.

Ainsi la lumière émise par la lampe est en quelque sorte emprisonnée à l'intérieur de la plaque et ne peut en sortir que par exemple par les réseaux 8 et 9, ou par les points d'illumination 10 et 11. Pour obtenir une intensité lumineuse suffisante on peut utiliser un ensemble de lampes réparties sur le pourtour de la plaque. On peut aussi utiliser un tube lumineux muni par exemple d'un filament rectiligne et situé dans une rainure creusée le long de ce pourtour. Il est utile dans ces deux dernières réalisations de rendre le support 35 de la lampe 31 lui-même réfléchissant, ou bien d'occulter les rainures après la mise en place de la mape linéaire par un capotage lui-même réfléchissant.

Lorsque l'on utilise un dispositif de projection classique avec une seule cellule à cristal liquide on est conduit à intégrer directement sur les substrats qui forment les faces de la cellule les circuits de commande. En effet, pour un dispositif de visualisation aux normes de télévision par exemple il faut avoir une matrice qui comporte sensiblement 600 lignes horizontales et 800 colonnes verticales, le tout sur un rectangle dont les dimensions sont de l'ordre du centimètre. Le nombre et la finesse des connexions rendent nécessaire une intégration de ces connexions et des circuits de commande qui y sont reliés.

Dans un dispositif selon l'invention, par contre on pourra utiliser par exemple 48 cellules à cristal liquide élémentaires réparties en 6 lignes de 8 cellules. Ces cellules seront carrées et comporteront chacune 100 lignes et 100 colonnes ce qui correspond bien au nombe total de 600 lignes et 800 colonnes. Pour éaliser 100 connexions sur une longueur de 1 cm on peut utiliser des techniques classiques qui ne nécessitent pas le recours aux techniques d'intégration. Dans ces conditions, les cellules proprement dites ne comporteront plus que les colonnes recevant le signal vidéo et les lignes recevant les signaux de chauffage. L'ensemble de l'électronique de commande sera réalisé avec une technologie hybride comportant un maximum d'éléments standards. Le support de ces composants sera la plaque 4 constituée par exemple par un substrat métallique émaillé à l'aide d'un revêtement isolant. Les connexions entre les sorties de l'électronique réalisée sous forme hybride sur cette plaque et les entrées des cellules à cristal liquide seront faites par exemple par des fils sérigraphiés sur cette couche isolante. Comme on dispose entre les cellules d'un important espace libre, les connexions destinées à relier les fils de chauffage pourront présenter une grande largeur et donc une faible résistance. Ainsi la puissance de chauffage sera dissipée essentiellement dans les lignes résistives faisant partie des cellules et non pas dans les fils de connexion.

Un tel dispositif comprenant sur un même support d'une part un ensemble de cellules sans électronique de commande et d'autre part une électronique de commande adaptée à cet ensemble de cellules, est plus particulièrement utile lorsque l'on désire le réaliser en un grand nombre d'exemplaires.

Pour des fabrications en petits nombres, il est utile de disposer d'un système modulaire. Pour cela, on utilisera par exemple des cellules à cristal liquide carrées de 100 lignes par 100 colonnes et comprenant leur propre électronique de commande intégrée. On associera alors ces cellules selon les dimensions du dispositif de visualisation désiré et on les connectera à une électronique de commande simplifiée extérieure.

On rappelle que les cellules utilisées et décrites dans la demande de brevet n° 77 13 738 fonctionnent à partir de signaux de synchronisation trame et ligne respectivement HT et HL, d'une horloge de point HC définissant le nombre de points par ligne, c'est-à-dire le nombre de colonnes, d'un signal de vidéo VS et d'une tension de chauffage VT.

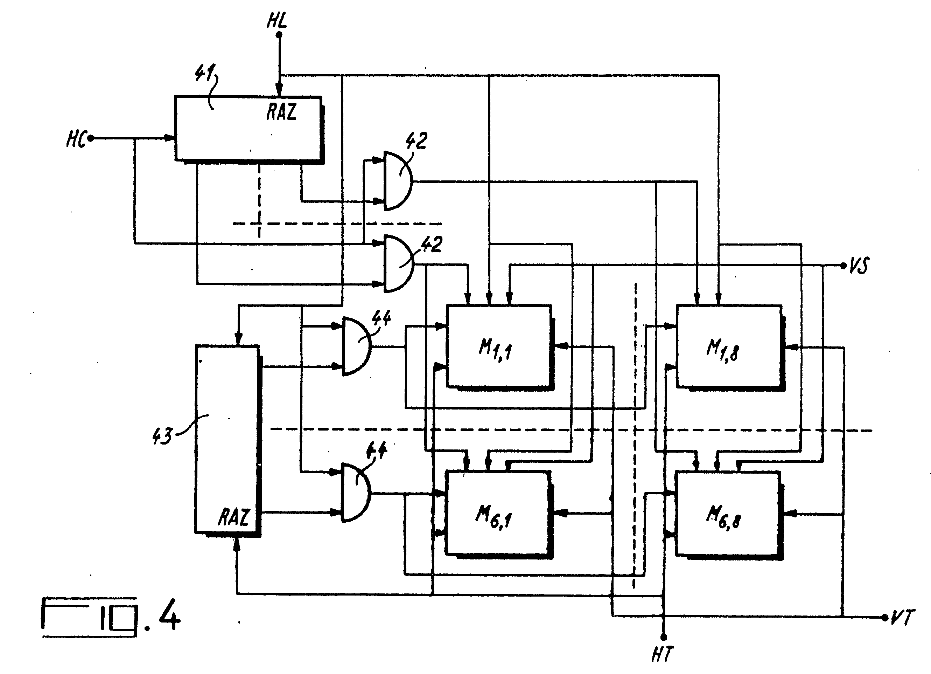

Dans l'exemple de réalisation représenté sur la figure 4, on dispose de 48 cellules réparties en 6 lignes et 8 colonnes. La figure est limitée à la représentation de 4 de ces cellules, soit $M_{1,1}$ ; $M_{1,8}$ ; $M_{6,1}$ et $M_{6,8}$, ainsi que des portions de l'électronique de commande extérieure qui lui est associée. Ces cellules comprennent leur électronique interne qui fonctionne à partir des signaux définis et rappelés plus haut. Le signal HC arrive sur un compteur 41 muni d'un décodeur. Ce compteur tourne au rythme des impulsions du signal HC et ouvre successivement par l'intermédiaire de son décodeur chacune des 8 portes 42 d'un ensemble de portes pendant 100 impulsions de HC. Ces portes reçoivent le signal HC et chacune d'entre elles est connectée aux cellules d'une colonne, c'est-à-dire que la première est connectée aux cellules $M_{1,1}$ à $M_{6,1}$, et que la dernière est connectée aux cellules $M_{1,8}$ à $M_{6,8}$. Ainsi les 100 premières impulsions de HC sont appliquées aux cellules de la première colonne, les 100 impulsions suivantes aux cellules de la deuxième colonne et les 100 dernières impulsions aux cellules de la dernière colonne. Ce compteur 41 est lui-même maintenu en phase par le signal HL qui est appliqué à son entrée de remise à zéro RAZ. Le signal HL qui agit à la fin de chaque ligne est appliqué simultanément à l'ensemble des cellules. Le signal VS qui est échantillonné par les impulsions HC est lui aussi appliqué simultanément à toutes les cellules.

Le signal HL est également appliqué à un compteur 43 muni d'un décodeur, qui ouvre successivement par l'intermédiaire de son décodeur chacune des portes 44 d'un ensemble de portes pendant 100 impulsions de HL. Ces portes reçoivent en parallèle le signal HL et leurs sorties sont connectées respectivement aux cellules de chaque ligne de cellule. Ainsi les cellules $M_{1,1}$ à $M_{1,8}$ reçoivent les 100 premières impulsions de synchronisation de ligne. Les cellules $M_{2,1}$ à $M_{2,8}$ reçoivent les 100 impulsions suivantes, et les cellules $M_{6,1}$ à $M_{6,8}$ reçoivent les 100 dernières impulsions. Le compteur 43 est maintenu en phase par les impulsions de trame HT appliquées à son entrée de remise à zéro RAZ. Ces impulsions de trame qui agissent en fin de trame sont également appliquées à l'ensemble des cellules. L'ensemble des cellules reçoit enfin la tension de chauffage VT.

Les lentilles formant l'optique distribuée sont des lentilles relativement simples et qui comportent un nombre important d'aberrations en particulier en coussinet ou en barillet. Pour obvier à ces aberrations, l'image qui sera ensuite projetée est formée à partir d'un objet initial placé à la place de l'écran. L'image à projeter ainsi obtenue présente des aberrations inverses de celles données à la projection et qui se compensent donc avec celles-ci. Pour utiliser un dispositif d'optique distribuée avec les cellules à cristal liquide, on procède à une anamorphose des lignes et des colonnes des cellules de telle manière que les distorsions à la projection sur l'écran compensent cette anamorphose pour que les droites restent droites. En vision directe des cellules présenteront donc une distorsion en coussinet ou en barillet selon l'optique utilisée pour la projection.

**Revendications**

1. Dispositif de visualisation par projection sur un écran d'une image reconstituée et agrandie d'une information visuelle originale découpée en fragments d'information visuelle, du type comprenant un ensemble de cellules à cristal liquide formant un agencement éclaté destiné à restituer lesdits fragments d'information selon le mode d'affichage diffusant à commande électrique ; des moyens pour illuminer chacune des cellules dudit ensemble ; et un ensemble de lentilles respectivement interposées entre chacune desdites cellules et ledit écran ; lesdites lentilles assurant la conjugaison optique des couches restitutrices desdites cellules avec la surface dudit écran afin d'y projeter une composition bord à bord des images agrandies desdits fragments d'information, caractérisé en ce que lesdites cellules à cristal liquide sont des cellules adaptées pour fonctionner par rétrodiffusion grâce à des réflecteurs associés auxdites couches restitutrices ; et en ce que lesdits moyens d'illumination comprennent une source de rayonnement associée à une plaque transparente destinée à guider ledit rayonnement entre des parties lisses de ses faces ; ladite plaque étant interposée entre ledit ensemble de cellules et ledit écran ; la face de ladite plaque située à l'opposé desdites cellules étant munie d'un ensemble de zones gravées respectivement associées à chacun des couples cellule-lentille, pour extraire au moins une partie du rayonnement guidé par ladite plaque et diriger le rayonnement ainsi extrait en direction de chacune des cellules ; l'agencement de chaque zone gravée par rapport à chaque couple cellule-lentille étant tel que seule la lumière rétrodiffusée par ces cellules contribue à l'éclairement de l'écran par projection tout en gênant au minimum sa transmission vers celui-ci.

2. Dispositif selon la revendication 1, caractérisé en ce que lesdites zones sont constituées par des réseaux annulaires (8, 9) centrés sur chacun desdits couples cellule-lentille ; l'obliquité du rayonnement émis par lesdits réseaux étant telle que son renvoi direct par lesdits réflecteurs tombe en dehors des lentilles ; l'extension annulaire desdits réseaux étant choisie de façon à ne pas occulter les portions de plaque situées sur l'axe des couples cellules-lentilles.

3. Dispositif selon la revendication 2, caractérisé en ce que chaque réseau est formé d'une série de rainures circulaires concentriques formant une couronne ; la section de ces rainures étant triangulaire et la surface du réseau étant recouverte d'une couche réfléchissante.

4. Dispositif selon la revendication 3, caractérisé en ce que la plaque transparente est située entre l'écran et les lentilles ; la largeur de la couronne étant sensiblement égale à la plus grande dimension de la cellule associée au réseau et le diamètre intérieur de la couronne étant suffisant pour que le rayonnement directement renvoyé par lesdits réflecteurs reste en dehors des lentilles.

5. Dispositif selon la revendication 1, caractérisé en ce que la plaque transparente est située entre l'écran et les lentilles, et que lesdites zones sont des pastilles (10-11) gravées sur la face de la plaque transparente opposée aux cellules ; ces pastilles étant centrées sensiblement au foyer des lentilles ; le rayonnement directement renvoyé par lesdits réflecteurs étant occulté par lesdites pastilles ; la taille desdites pastilles étant choisie pour gêner au minimum la transmission vers ledit écran du rayonnement rétrodiffusé.

6. Dispositif selon la revendication 5, caractérisé en ce que chaque pastille est formée par une zone dépolie de la surface de la plaque transparente, et qu'elle est recouverte d'un revêtement opaque et réfléchissant.

7. Dispositif selon l'une quelconque des revendications 1 à 6, caractérisé en ce que ladite source de rayonnement (31) est insérée dans une cavité creusée dans l'une des parois latérales de ladite plaque ; ces parois étant recouvertes d'une couche réfléchissante (32).

8. Dispositif selon la revendication 7, caractérisé en ce que ladite source lumineuse est une lampe à filament rectiligne et que la cavité est allongée et s'étend sensiblement le long de toute la paroi latérale.

9. Dispositif selon l'une quelconque des revendications 7 et 8, caractérisé en ce que les faces supérieure et inférieure de ladite lame sont recouvertes le long de leurs bords d'une couche opaque permettant d'occulter les rayons provenant de ladite source lumineuse et frappant ces deux faces sans subir la réflexion totale (33).

10. Dispositif selon l'une quelconque des revendications 1 à 9, caractérisé en ce que les cellules à cristal liquide comprennent des moyens de commande leur permettant de fonctionner seules et que le dispositif comprend en outre des moyens de commutation permettant de distribuer à ces moyens de commande des signaux extérieurs de commande.

**Claims**

1. A display device for projecting on a screen a reconstituted and enlarged image of an original item of visual data broken into visual data fragments, of the type comprising a set of liquid-crystal cells forming an exploded arrangement, to reconstitute the data fragments in an electrically controlled diffusion display mode ; means of illuminating each such cell and a set of lenses interposed between each such cell and the screen respectively ; these lenses providing optical combination of the reconstituting layers of these cells and the surface of the screen, in order to project an edge-to-edge composition of the enlarged images of the data fragments ; the device being characterized by the fact that the liquid-crystal cells are designed to function by backward diffusion, by means of reflectors combined with the reconstituting layers ; and by the fact that the means of illumination comprise a radiation source associated to a transparent sheet designed to guide the rays between smooth parts of its surfaces ; this sheet being interposed between the set of cells and the screen ; the surface of the sheet facing these cells being provided with a set of engraved zones, corresponding to each cell/lens pair, in order to extract at least part of the radiation guided by the sheet and direct these extracted rays in the direction of each cell ; each engraved zone being arranged in relation to each cell/lens pair in such a way that only light backward-diffused by these cells contributes to illumination of the screen by projection, while providing only minimal hindrance to its transmission to the screen.

2. A device as defined in claim 1, characterized by the fact that the said zones are formed of annular networks (8, 9) centred on each cell/lens pair, the obliqueness of radiation transmitted by these networks being such that its direct transmission by the reflectors falls outside the lenses, the annular extent of these networks being chosen not to mask the portions of sheet situated on the axis of the cell/lens pairs.

3. A device as defined in claim 2, characterized by the fact that each network is formed of a series of concentric circular grooves forming a crown, these grooves having a triangular cross section, and the surface of the network being covered with a reflecting layer.

4. A device as defined in claim 3, characterized by the fact that the transparent sheet is situated between the screen and the lenses, the width of the crown being approximately equal to the larger dimension of the cell corresponding to the network, and the inside diameter of the crown being sufficient for the radiation transmitted directly by the reflectors to remain outside the lenses.

5. A device as defined in claim 1, characterized by the fact that the transparent sheet is situated between the screen and the lenses, and that the zones are patches (10-11) etched on the face of said sheet facing the cells, these patches being approximately concentric with the focus of the lenses, radiation directly transmitted by the reflectors being masked by these patches, the size of which is chosen to provide only minimal hindrance to transmission of backward-diffused radiation towards the screen.

6. A device as defined in claim 5, characterized by the fact that each patch is formed of a frosted zone on the surface of the transparent sheet, and that it is covered with an opaque reflecting substance.

7. A device as defined in any one of claims 1 to 6, characterized by the fact that the radiation source (31) is placed in a cavity provided in one of the edges of the sheet, these edges being covered with a reflecting layer (32).

8. A device as defined in claim 7, characterized by the fact that the light source is a straight-filament lamp and that the cavity is elongated, extending over approximately the whole length of the side wall.

9. A device as defined in either of claims 7 and 8, characterized by the fact that the upper and lower surfaces of the sheet are covered along their edges with an opaque layer adapted to mask rays coming from the light source and striking these two surfaces without undergoing total reflection (33).

10. A device as defined in any one of claims 1 to 9, characterized by the fact that the liquid-crystal cells comprise controlling means enabling them to function alone, and that the device further comprises switching means, enabling external control signals to be distributed to these controlling means.

**Ansprüche**

1. Sichtanzeigevorrichtung, bei der durch Projektion auf einen Schirm ein rekonstruiertes und vergrössertes Bild einer in visuelle Informationsfragmente zerlegten originalen visuellen Information sichtbar gemacht wird, und die folgende Elemente aufweist : eine Gruppe von getrennt angeordneten Flüssigkristall-Zellen, die dazu bestimmt ist, die Informationsfragmente durch elektrisch gesteuerte Streu-Anzeige wiederherzustellen, Mittel zum Beleuchten jeder der Zellen dieser Gruppe, und eine Gruppe von jeweils zwischen jeder Zellen und dem Schirm angeordneten Linsen, wobei durch die Linsen die optische Konjugation der Wiedergabeschichten der Zellen mit der Oberfläche genannten Schirmes erfolgt, um auf letztere eine Zusammenstellung der Kante an Kante angeordneten vergrösserten Bilder der Informationsfragmente zu projizieren, dadurch gekennzeichnet, dass die Flüssigkeitskristall-Zellen dazu geeignet sind, mit Hilfe von den genannten Wiedergabeschichten zugeordneten Reflektoren durch Rückdiffusion zu arbeiten, und dass die Beleuchtungsmittel eine Lichtquelle aufweisen, die einer durchsichtigen Platte zugeordnet ist, die das Licht zwischen glatten Teilen ihrer Seiten führt, wobei die Platte zwischen der Zellengruppe und dem Schirm angeordnet ist ; wobei diejenige Seite der Platte, die den Zellen entgegengesetzt ist, mit einer Mehrzahl von gravierten Bereichen versehen ist, die je einem aus einer Linse und einer Zelle Paar bestehenden zugeordnet sind, um mindestens einen Teil des durch die Platte leiteten Lichtes zu entnehmen und das so entnommene Licht auf jede Zelle zu richten, und wobei jeder gravierte Bereich in bezug auf jedes Linsen-Zellen-Paar derart angeordnet ist, dass nur das durch diese Zellen rückgestreute Licht zur Beleuchtung des Schirmes durch Projektion beiträgt und dabei die Lichtübertragung auf den letzteren nur minimal behindert.

2. Vorrichtung nach Anspruch 1, dadurch gekennzeichnet, dass die genannten Bereiche aus ringförmigen Gittern (8, 9) bestehen, welche auf jedes der Linsen-Zellen-Paaren zentriert sind, wobei die Schrägrichtung des von den Gittern abgestrahlten Lichtes derart gewält ist, dass es beim direkten Zurückwerfen durch die Reflektoren ausserhalb der Linsen fällt, und wobei die ringförmige Abmessung der Gitter derart gewählt ist, um dass die auf der Achse der Linsen-Zellen-Paare liegenden Plattenteile nicht abgeschirmt werden.

3. Vorrichtung nach Anspruch 2, dadurch gekennzeichnet, dass jedes Gitter durch eine Serie von konzentrischen kreisförmigen, einen Kranz bildenden Rillen gebildet ist, wobei der Querschnitt dieser Rillen dreieckig ist und die Oberfläche des Gitters mit einer reflektierenden Schicht bedeckt ist.

4. Vorrichtung nach Anspruch 3, dadurch gekennzeichnet, dass sie durchsichtige Platte zwischen dem Schirm und den Linsen angeordnet ist, wobei die Breite des Kranzes wesentlich gleich der grössten Abmessung der dem Gitter zugeordneten Zelle ist, und der Innendurchmesser des Kranzes gross genug ist, so dass das direkt durch genannte Reflektoren zurückgeworfene Licht ausserhalb der Linsen bleib.

5. Vorrichtung nach Anspruch 1, dadurch gekennzeichnet, dass die durchsichtige Platte zwischen dem Schirm und den Linsen angeordnet ist, und dass die Bereiche auf der den Zellen gegenüberliegenden Seite gravierte Pastillen (10, 11) sind, wobei diese Pastillen wesentlich auf den Brennpunkt der Linsen zentriert sind, während das direkt von den Reflektoren zurückgeworfene Licht von den Pastillen abgeschirmt ist, und wobei die Abmessungen der Pastillen so gewählt ist, dass sie den Durchlass des rückgestreuten Lichtes auf den Schirm nur minimal stören.

6. Vorrichtung nach Anspruch 5, dadurch gekennzeichnet, dass jede Pastille durch einen mattierten Bereich der Oberfläche der durchsichtigen Platte gebildet ist, und dass sie mit einem undurchsichtigen und reflektierenden Ueberzug bedeckt ist.

7. Vorrichtung nach Anspruch 1 bis 6, dadurch gekennzeichnet, dass die Lichtquelle (31) sich in einer der Seitenwandungen der Platte vorgesehenen Aushölung befindet, wobei diese Wandungen mit einer reflektierenden Schicht (32) bedeckt sind.

8. Vorrichtung nach Anspruch 7, dadurch gekennzeichnet, dass die Lichtquelle eine Lampe mit geradlinigem Glühfaden ist und dass die Aushölung länglich ist und sich wesentlich über die gesamte Ausdehnung der Seitenwandung erstreckt.

9. Vorrichtung nach einem der Ansprüche 7 und 8, dadurch gekennzeichnet, dass die obere Fläche und die untere Fläche der Platte längs ihrer Ränder mit einer undurchsichtigen Schicht (33) überzogen sind, die das Abschirmen von der Lichtquelle ausgehenden Strahlen erlaubt, welche auf diese beiden Flächen einfallen, ohne totalreflektiert zu werden.

10. Vorrichtung nach Anspruch 1 bis 9, dadurch gekennzeichnet, dass die Flüssigkristall-Zellen Steuermittel aufweisen, vermittels welcher sie allein arbeiten können, und dass die Vorrichtung ferner Schalmittel aufweist, durch welche äussere Steuersignale auf diese Steuermittel übertragbar sind.

FIG. 1

Fig. 2

Fig. 3

HL

41

RAZ

HC

42

42

VS

44

M₁,₁

M₁,₈

43

RAZ

44

M₆,₁

M₆,₈

FIG.4

HT

VT

3

0 014 609